# EUROPÄISCHE PATENTSCHRIFT

(11) **EP 2 311 713 B1**
(45) Veröffentlichungstag und Bekanntmachung des Hinweises auf die Patenterteilung: **09.05.2012**
(21) Anmeldenummer: 10010121.1
(22) Anmeldetag: 22.09.2010
(51) Int. Cl.: B62D 25/20, B62D 27/02, B62D 29/00

(54) **Längsträger eines Fahrzeugkarosserieaufbaus**
Side frame of a vehicle body structure
Longeron d'un véhicule automobile

(30) Priorität: 14.10.2009 DE 102009049312
(43) Veröffentlichungstag der Anmeldung: 20.04.2011
(73) Patentinhaber: Audi AG, 85045 Ingolstadt (DE)
(72) Erfinder: Weigl, Willibald, 85095 Zandt (DE); Schromm, Martin, 85080 Gaimersheim (DE); Gülich, Stephan, 85139 Wettstetten (DE); Oleff, Nils, 85049 Ingolstadt (DE)
(74) Vertreter: Engelhardt, Harald

(56) Entgegenhaltungen:
- DE-A1- 10 151 211
- US-A- 5 882 065
- US-A- 6 099 071
- US-B1- 6 361 102

## Beschreibung

Die Erfindung betrifft einen Längsträger eines Fahrzeugkarosserieaufbaus nach dem Oberbegriff des Anspruchs 1.

Aus der DE 10 2004 012 804 A1 ist ein gattungsgemäßer Längsträger eines Fahrzeugkarosserieaufbaus bekannt, der aus zwei Längsträgerabschnitten, aus einem Vorderwagen-Längsträger und aus einem Kabinen-Längsträger im Bodenbereich der Insassenkabine besteht, wobei die beiden Längsträgerabschnitt im Bereich einer Stirnwand miteinander verbunden sind.

Konkret handelt es sich hier um einen konventionellen Stahlblech-Karosserieaufbau und die Verbindung der beiden Trägerabschnitte ist durch Überlappungen mit Blechdoppelungen und Schweißverbindungen hergestellt. Der Kabinenlängsträger ist mit einem Längsträgerhohlprofil dadurch gebildet, dass ein längsverlaufendes, nach oben offenes Hut-Profil von unten auf das Bodenblech gesetzt und an den Huträndern durch Schweißen mit dem Bodenblech verbunden ist, wodurch das Längsträgerhohlprofil insgesamt nach unten mit einer relativ stark zerklüfteten und strömungsungünstigen Unterbodenstruktur abragt. Auch der Vorderwagen-Längsträger ist durch ein ähnliches Hutprofil in Verbindung mit einer Außenwand durch Schweißen hergestellt. Bei diesem konventionellen Stahlblech-Karosseriebau sind keine speziellen Maßnahmen für eine Gewichtsreduzierung vorgesehen.

Weiter ist aus der DE 102 57 259 A1 ein Vorderrahmen eines Aluminium-Karosserieaufbaus bekannt, bei dem ein Vorderwagen-Längsträger als Aluminiumextrusionsprofil mit seitlichen Öffnungen im Bereich einer Stirnwand mit einem Aluminium-Strukturdruckgussteil verschraubt ist. Einzelheiten dieses Aluminium-Strukturdruckgussteils, insbesondere im Bodenbereich der Insassenkabine, sind hier nicht angegeben. Der bezeichnete Karosseriebereich ist als Aluminiumleichtbau hergestellt, wobei aber die ausschließliche Verwendung von Aluminiummaterial unter anderem auch zum Erhalt der erforderlichen Steifigkeit aufwendig und kostenintensiv ist.

In allgemein bekannter Weise kommen bei modernen Fahrzeugkarosserien bei strömungsgünstigen Gestaltungen zusätzlich zu Stahlblechen in einem Material-Mix auch Werkstoffe aus Leichtmetallen oder Leichtmetalllegierungen, insbesondere aus Aluminium zum Einsatz, um durch Gewichtseinsparungen den Kraftstoffverbrauch zu reduzieren. Die Steifigkeiten und Fügetechnologien von Leichtmetallbauteilen unterscheiden sich vom bisherigen konventionellen, ausschließlichen Stahlblechbau, so dass dadurch auftretende Probleme mit einem auf die jeweilige Karosseriestelle genau abgestimmten Werkstoff-Mix bei entsprechender Kombination von Bauteilen sowie mit kostengünstigen und geeigneten Fügetechniken für einen Großserieneinsatz zu lösen sind.

Aus der US 6,929,314 B2 ist weiter eine mehrteilige Längsträgeranordnung aus vorderem Längsträger und Bodenlängsträger bekannt, die im Stirnwandbereich durch eine zweischalige Konsole miteinander verbunden sind, wobei die Schalen Aluminiumgussteile sind.

Aus der DE 101 51 211 B4 ist eine Rahmenkonstruktion aus Stahl mit vorderem Längsträger und Bodenrahmenlängsträger bekannt, wobei der Bodenrahmenlängsträger über ein gekröpftes Teil mit dem vorderen Längsträger verbunden ist.

Schließlich ist aus der US 6,099,071 A ein vorderer Längsträger aus einem Aluminiumrohr bekannt, der über die Stirnwand mit dem Bodenlängsträger verbunden ist.

Aufgabe der Erfindung ist es, einen gattungsgemäßen konventionellen Längsträger eines Fahrzeugkarosserieaufbaus so weiterzubilden, dass ein gewichtsgünstiger Aufbau mit der erforderlichen Steifigkeit und hoher Crashsicherheit sowie mit einer für einen Großserieneinsatz geeigneten Fügetechnik erhalten wird.

Diese Aufgabe wird dadurch gelöst, dass der Vorderwagen-Längsträger ein rohrförmiges Aluminiumstrangpressprofil ist und der Kabinen-Längsträger als geschlossener Längshohlträger durch ein Boden-Aluminiumblech und an seiner Oberseite durch ein daran angeschlossenes Längsträger-Winkelprofil als Längsträger-Stahlschließteil aus warmgeformtem Stahl gebildet ist. Der Vorderwagen-Längsträger und der Kabinen-Längsträger liegen fluchtend in einer Längsebene, dabei endet der Vorderwagen-Längsträger rückseitig an der Stirnwand und der Kabinen-Längsträger ist frontseitig mit einem Überlappungsabschnitt des Längsträger-Stahlschließteils durch die Stirnwand geführt. Damit liegt der Kabinen-Längsträger überlappend am rückseitigen Bereich des Vorderwagen-Längsträgers an und ist dort mit diesem verbunden.

Vorteilhaft ist durch den Werkstoff-Mix der hier verwendeten Bauteile die erforderliche Steifigkeit und eine hohe Crashsicherheit gewährleistet, da insbesondere durch den Überlappungsabschnitt trotz unterschiedlicher Materialien keine funktionale Trennung der beiden Längsträgerteile an der Stirnwand erfolgt, so dass ein optimaler Kraftfluss ohne Steifigkeitssprünge entsteht. Zudem ist zwischen dem Stahl-Überlappungsabschnitt und dem Aluminium-Vorderwagen-Längsträger eine für einen Großserieneinsatz gut geeignete Fügetechnik möglich.

Besonders bevorzugt ist der Vorderwagen-Längsträger als Aluminium-Rechteckrohr ausgeführt, wobei der Überlappungsabschnitt ein wangenförmiger, längsverlaufender Wandfortsatz als Stahlflansch des Längsträger-Stahlschließteils ist. Ein solcher Stahlflansch kann dann an einer vertikalen Wand des Aluminium-Rechteckrohrs anliegen und durch Verschraubungen verbunden werden. Dazu wird vorteilhaft am Stahlflansch ein Lochbild vorgegeben und die Verschraubungen werden mittels selbstschneidender Schrauben zusammen mit einer Verklebung hergestellt. Eine solche Verbindung ergibt eine hohe Steifigkeit im Verbindungsbereich zusammen mit einer Dichtigkeit und einem Korrosionsschutz.

Der Stahlflansch kann als frontseitige Verlängerung der zur Fahrzeugaußenseite hin liegenden Vertikal-Wand des winkeligen Längsträger-Stahlschließteils ausgeführt sein. Zur Herstellung eines Kabinen-Längsträgers mit rechteckigem Querschnitt wird ein solches Längsträger-Stahlschließteil in Verbindung mit einer längsverlaufenden Bodenblech-Stufenabkantung verwendet, wobei die Bodenblech-Stufenabkantung den Boden des Kabinen-Längsträgers und die zur Fahrzeugmitte hin liegende vertikale seitenwand und das Längsträger-Stahlschließteil die Decke des Kabinen-Längsträgers und die zur Fahrzeugseite hin liegende Vertikalwand des Kabinen-Längsträgers ausbilden.

Der vordere Kabinenboden und der Übergang zur Stirnwand ist als strukturiertes Aluminium-Gussteil ausgebildet, an dem einerseits der Vorderwagen-Längsträger abgestützt und angeschlossen sowie andererseits das Aluminium-Bodenblech angebunden sind. Weiter ist dort das Längsträger-Stahlschließteil mit seinem Überlappungsabschnitt, insbesondere seinem Stahlflansch durchgeführt, wobei die Durchtrittsstelle abgedichtet ist.

Eine besonders bevorzugte Ausgestaltung hierzu sieht vor, dass das Aluminium-Strukturgussteil den zugeordneten Vorderwagen-Längsträger von einem stirnseitigen Abstützungsbereich ausgehend wenigstens auf einer Seite mit einem Abstellbereich umgreift, wobei dieser Abstellbereich bevorzugt in einer flächigen Anlageverbindung an dem jeweils zugeordneten Bereich des Vorderwagen-Längsträgers anliegt. Besonders bevorzugt ist hier eine Ausgestaltung, bei der mehrere Abstellbereiche vorgesehen sind, die bevorzugt auf gegenüberliegenden Seiten des zugeordneten Vorderwagen-Längsträgerbereichs liegen und diesen somit auf gegenüberliegenden Seiten umgreifen bzw. einschuhen. Bevorzugt ist hier eine konkrete Ausgestaltung mit einer im Wesentlichen U-förmigen Geometrie, bei der die gegenüberliegenden Abstellbereiche die U-Schenkel ausbilden, während der stirnseitige Abstützungsbereich die U-Basis ausbildet. Insgesamt wird hier mit einem derartigen Aufbau eine besonders bevorzugte, stabile und steife Anbindung zur Verfügung gestellt.

In Verbindung mit der eben geschilderten konkreten Ausgestaltung ist es weiter besonders vorteilhaft, dass der Stahlflansch in einer flächigen Anlageverbindung an dem zugeordneten Abstellbereich anliegt und weiter im Bereich außerhalb des Stahlflanschs mit einer Stahlflansch-Abstufung in eine flächige Anlageverbindung am Vorderwagen-Längsträger übergeht. Vorzugsweise ist hier auch an dem Stahlflansch zugeordneten Abstellbereich ein Lochbild vorgegeben, das mit dem Lochbild des zugeordneten Stahlflansches fluchtet. Grundsätzlich können aber auch andere Abstellbereich-Verschraubungen mit dem Vorderwagen-Längsträger vorgesehen sein.

Der Vorderwagen-Längsträger verläuft geradlinig in Fahrzeuglängsrichtung und liegt im Vergleich zum Kabinenboden höher, wobei im vorderen Bereich des Kabinen-Längsträgers ein nach oben gewölbter Höhenausgleichsbereich vorgesehen ist.

Während der Stahlflansch des Längsträger-Stahlschließteils mit dem Aluminium-Vorderwagen-Längsträger durch Verschraubungen verbunden ist, soll der Anschluss des Längsträger-Stahlschließteils an die als Aluminiumblech und/oder als Aluminiumgussteil hergestellte Stirnwand sowie an das Boden-aluminiumblech durch Nietverbindungen, vorzugsweise durch Vollstanznieten in Verbindung mit Verklebungen hergestellt sein.

Anhand mehrerer Zeichnungen wird die Erfindung weiter erläutert.

Es zeigen:
- Fig. 1: eine Ansicht von schräg oben auf einen linken Längsträger eines Fahr- zeugkarosserieaufbaus, und
- Fig. 2: eine schematische Draufsicht auf einen Schnitt entlang der Linie A-A aus Fig. 1.

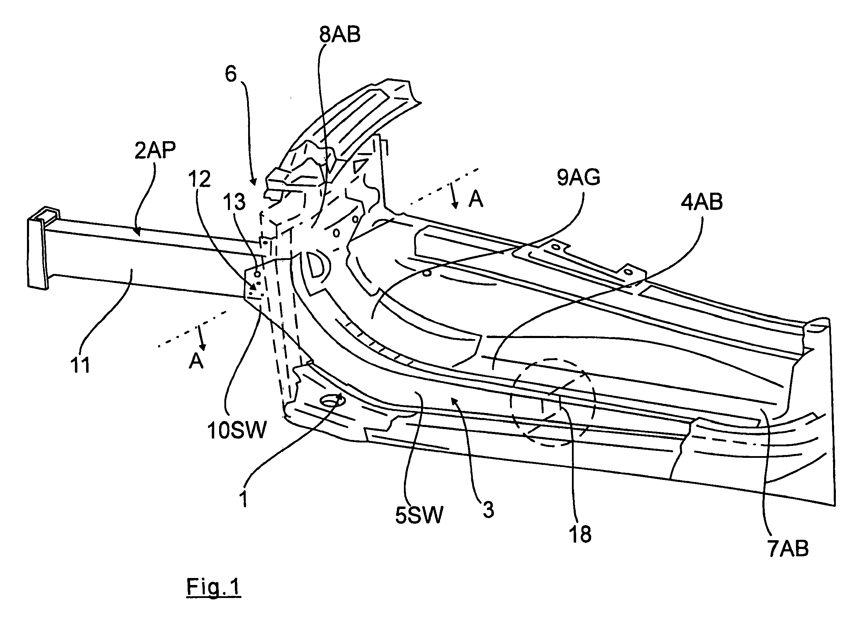

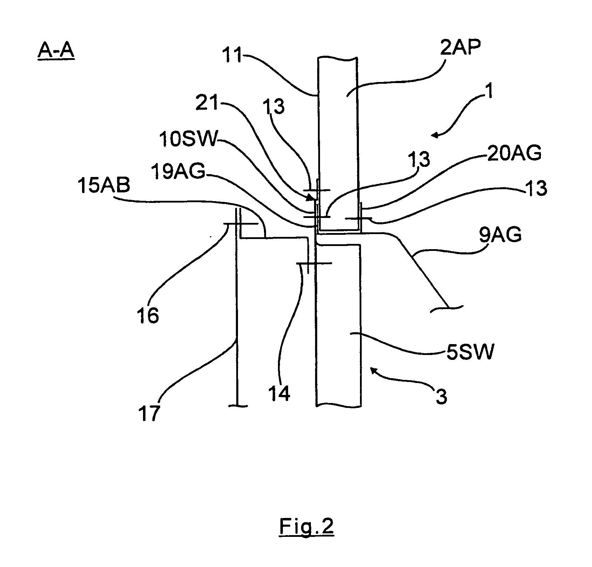

In den Fig. 1 und 2 ist ein Längsträger 1 eines Fahrzeugkarosserieaufbaus gezeigt, der aus einem Vorderwagen-Längsträger 2AP und einem Kabinen-Längsträger 3 besteht. Der Vorderwagen-Längsträger 2AP ist ein Aluminiumstrangpressprofil in Form eines Aluminiumrechteckrohrs, welches in einer Fahrzeuglängsebene horizontal nach vorne gerichtet ist und an den sich in einer Vertikallängsebene der Kabinen-Längsträger fluchtend anschließt.

Der Kabinen-Längsträger 3 ist dagegen als geschlossener Längshohlträger durch eine Stufenabkantung des Boden-Aluminiumblechs 4AB in Verbindung mit einem Längsträger-Stahlschließteil 5SW gebildet, welches aus warmgeformtem Stahl hergestellt und von oben auf das Boden-Aluminiumblech 4AB aufgesetzt und mittels Nietverbindungen verbunden ist. Der Kabinen-Längsträger 3 erstreckt sich von einer Stirnwand 6 durchgehend bis zu einem Fersenblech 7AB.

Die Stirnwand 6 ist sowohl durch Stirn-Aluminiumblechelemente 8AB als auch durch ein Aluminium-Strukturgussteil 9AG gebildet, welches sich wannenförmig gebogen nach unten zum Boden-Aluminiumblech 4AB fortsetzt und unter anderem zusammen mit dem Längsträger-Schließteil 5SW den Höhenausgleich zwischen dem höherliegenden Vorderwagen-Längsträger 2AP und dem tieferliegenden Kabinen-Längsträger 3 herstellt.

Das winkelige Längsträger-Stahlschließteil 5SW weist einen Stahlflansch 10SW als frontseitige Verlängerung der Vertikalwand auf, der an der entsprechenden Vertikalwand 11 des Vorderwagen-Längsträgers 2AP anliegt. Der Stahlflansch 10SW hat ein Lochbild 12 und wird dort über selbstschneidende Verschraubungen 13 mit dem Vorderwagen-Längsträger 2AP verbunden. Diese Verbindung erfolgt mit einer zusätzlichen Verklebung sowie einer zusätzlichen Abdichtung der Durchtrittsstelle an der Stirnwand 6.

Aus der schematischen Draufsicht nach Fig. 2 ist ersichtlich, dass sich der Vorderwagen-Längsträger 2AP rückseitig an einem stirnseitigen Abstützungsbereich 22AG am Aluminium-Strukturgussteil 9AP, welches zumindest teilweise die Stirnwand 6 ausbildet, abstützt und mit dem Kabinen-Längsträger 3 in einer Kabinen-Vertikallängsebene fluchtend ausgerichtet ist. Zur Fahrzeugaußenseite hin können am Längsträger-Stahlschließteil 5SW mittels Vollstanznietverbindungen 14 weitere Aluminiumbauteile 15AB angeschlossen sein und über weitere Nietverbindungen 16 insbesondere mit einem A-Säuleninnenblech 17 verbunden werden.

Wie dies aus der Fig. 2 weiter ersichtlich ist, weist das Aluminium-Strukturgussteil 9AG am stirnseitigen Abstützungsbereich 22AG 2 U-schenkelartig von diesem abragende Abstellbereiche 19AG und 20AG auf, die den zugeordneten Vorderwagen-Längsträgerbereich seitlich umgreifen und an diesem in einer Anlageverbindung anliegen.

Der Stahlflansch 10SW liegt wiederum in einer flächigen Anlageverbindung an dem Abstellbereich 19AG an und ist über eine Stahlflansch-Abstufung 21 über den Abstellbereich 19AG hinaus verlängert, um in einer flächigen Anlageverbindung an dem Vorderwagen-Längsträger 2AP ebenfalls in einer flächigen Anlageverbindung anzuliegen.

Die Anbindung kann hier grundsätzlich mittels einer Verklebung erfolgen. Alternativ oder zusätzlich dazu kann jedoch auch, wie bereits zuvor dargelegt, eine Verschraubung 13 vorgesehen sein. Um eine einwandfreie Verschraubung im Bereich des Abstellbereichs 19AG vornehmen zu können, weist dieser vorzugsweise ein dem Lochfeld 12 des Stahlflansches 10SW entsprechendes Lochfeld auf.

Bei den in Verbindung mit den Bezugszeichen verwendeten Indizes bedeuten

| | |
|---|---|
| AG | Aluguss |
| AB | Alublech |
| AP | Alustrangpressprofil |
| SW | warmgeformter Stahl. |

### Bezugszeichenliste

- 1: Längsträger
- 2AP: Vorderwagen-Längsträger
- 3: Kabinen-Längsträger
- 4AB: Boden-Aluminiumblechs
- 5SW: Längsträger-Stahlschließteil
- 6: Stirnwand
- 7AB: Fersenblech
- 8AB: Stirn-Aluminiumblechelemente
- 9AG: Aluminium-Strukturgussteil
- 10SW: Stahlflansch
- 11: Vertikal-Wand
- 12: Lochbild
- 13: Verschraubung
- 14: Vollstanznietverbindung
- 15AB: Aluminiumbauteile
- 16: Nietverbindung
- 17: A-Säulen-Innenblech
- 18: Bodenblech-Stufenabkantung
- 19AG: Abstellbereich
- 20AG: Abstellbereich
- 21: Stahlflansch-Abstufung
- 22AG: stirnseitiger Abstützungsbereich

## Patentansprüche

1. Längsträger eines Fahrzeugkarosserieaufbaus,
bestehend aus einem Vorderwagen-Längsträger (2AP) und einem Kabinen-Längsträger (3) im Bodenbereich der Insassenkabine, die im Bereich einer Stirnwand (6) miteinander verbunden sind,
wobei der Vorderwagen-Längsträger (2AP) ein rohrförmiges Aluminiumstrangpressprofil ist, **dadurch gekennzeichnet,**
**dass** der Kabinen-Längsträger (3) als geschlossener Längshohlträger durch ein Boden-Aluminiumblech (4AB) und an seiner Oberseite durch ein daran angeschlossenes Längsträger-Winkelprofil als Längsträger-Stahlschließteil (5SW) aus warmgeformtem Stahl gebildet ist, und
**dass** der Vorderwagen-Längsträger (2AP) und der Kabinen-Längsträger (3) fluchtend in einer Vertikal-Längsebene ausgerichtet sind, wobei der Vorderwagen-Längsträger (2AP) rückseitig an der Stirnwand (6) endet und der Kabinen-Längsträger (3) frontseitig mit einem Überlappungsabschnitt (10SW) durch die Stirnwand (6) geführt ist, damit am Vorderwagen-Längsträger (2AP) anliegt und dort mit diesem verbunden (13) ist.

2. Längsträger nach Anspruch 1, **dadurch gekennzeichnet,**
**dass** der Vorderwagen-Längsträger (2AP) als Aluminium-Rechteckrohr ausgebildet ist,
**dass** der Überlappungsabschnitt ein wangenförmiger, längsverlaufender Wandfortsatz als Stahlflansch (10SW) des Längsträger-Stahlschließteils (5SW) ist, und
**dass** der Stahlflansch (10SW) an einer vertikalen Wand (11) des Aluminium-Rechteckrohrs anliegt und durch Verschraubungen (13) verbunden ist.

3. Längsträger nach Anspruch 2, **dadurch gekennzeichnet, dass** am Stahlflansch (10SW) ein Lochbild (12) vorgegeben ist und die Verschraubungen (13) mittels selbstschneidender Schrauben zusammen mit einer Verklebung hergestellt sind.

4. Längsträger nach Anspruch 2 oder Anspruch 3, **dadurch gekennzeichnet, dass** der Stahlflansch (10SW) eine frontseitige Verlängerung der zur Fahrzeugaußenseite hin liegenden Vertikal-Wand des winkeligen Längsträger-Stahlschließteils (5SW) ist, mit dem in Verbindung mit einer längsverlaufenden Bodenblech-Stufenabkantung (18) ein im Querschnitt rechteckiger Kabinen-Längsträger (3) ausgebildet ist.

5. Längsträger nach einem der Ansprüche 1 bis 4, **dadurch gekennzeichnet, dass** der vordere Kabinenboden und der Übergang zur Stirnwand als Aluminium-Strukturgussteil (9AG) ausgebildet ist, an dem einerseits der Vorderwagen-Längsträger (2AP) abgestützt und angeschlossen sowie andererseits das Boden-Aluminiumblech (4AB) angebunden sind und durch das das Längsträger-Stahlschließteil (5SW) mit seinem Überlappungsabschnitt, insbesondere seinem Stahlflansch (10SW) geführt und an der Durchtrittsstelle abgedichtet ist.

6. Längsträger nach Anspruch 5, **dadurch gekennzeichnet, dass** das Aluminium-Strukturgussteil (9AG) den zugeordneten Vorderwagen-Längsträger (2AP) von einem stirnseitigen Abstützungsbereich (22AG) ausgehend wenigstens auf einer Seite mit einem Abstellbereich (19AG, 20AG) umgreift, insbesondere in einer flächigen Anlageverbindung und/oder auf gegenüberliegenden Seiten mit gegenüberliegenden Abstellbereichen (19AG, 20AG) umgreift.

7. Längsträger nach Anspruch 6, **dadurch gekennzeichnet, dass** der Stahlflansch (10SW) in einer flächigen Anlageverbindung an dem zugeordneten Abstellbereich (19AG) anliegt und weiter im Bereich außerhalb des Stahlflansches (10SW) mit einer Stahlflansch-Abstufung (21) oder -Abbiegung in eine flächige Anlageverbindung am Vorderwagen-Längsträger (2AP) übergeht.

8. Längsträger nach Anspruch 6 oder 7, **dadurch gekennzeichnet, dass** am dem Stahlflansch (10SW) zugeordneten Abstellbereich (19AG) ein Lochbild vorgegeben ist, das mit dem Lochbild (12) des zugeordneten Stahlflansches (10SW) fluchtet, und/oder dass der wenigstens eine Abstellbereich (19AG, 20AG) durch Verschraubungen (13) mit dem Vorderwagen-Längsträger (2AP) verbunden ist.

9. Längsträger nach einem der Ansprüche 1 bis 8, **dadurch gekennzeichnet, dass** der Vorderwagen-Längsträger (2AB) geradlinig in Fahrzeuglängsrichtung verläuft und im Vergleich zum Kabinenboden höher liegt und im vorderen Bereich des Kabinen-Längsträgers (3) ein nach oben gewölbter Höhenausgleichsbereich vorgesehen ist.

10. Längsträger nach einem der Ansprüche 1 bis 9, **dadurch gekennzeichnet, dass** der Anschluss des Längsträger-Stahlschließteils (5SW) an die als Aluminiumblechteil und/oder als Aluminiumgussteil hergestellte Stirnwand (6) sowie an das Boden-Aluminiumblech (4AB) durch Nietverbindungen, vorzugsweise durch Vollstanznieten und Verklebungen hergestellt ist.

## Claims

1. Longitudinal beam of a vehicle body structure, composed of a vehicle front end longitudinal beam (2AP) and a cabin longitudinal beam (3) in the floor region of the occupant cabin, said longitudinal beams being connected to one another in the region of a bulkhead (6),
wherein the vehicle front end longitudinal beam (2AP) is a tubular aluminium extruded profile, **characterized**
**in that** the cabin longitudinal beam (3) is formed as a closed longitudinal hollow beam by an aluminium base plate (4AB) and, on the top side thereof, a longitudinal beam angle profile which is connected thereto and which is in the form of a longitudinal beam steel closing part (5SW) composed of hot-formed steel, and
**in that** the vehicle front end longitudinal beam (2AP) and the cabin longitudinal beam (3) are aligned flush in a vertical longitudinal plane, wherein the vehicle front end longitudinal beam (2AP) ends at the rear at the bulkhead (6), and the cabin longitudinal beam (3) is guided at the front with an overlap portion (10SW) through the bulkhead (6), bears with said overlap portion against the vehicle front end longitudinal beam (2AP) and is connected (13) to the latter there.

2. Longitudinal beam according to Claim 1, **characterized**
**in that** the vehicle front end longitudinal beam (2AP) is formed as an aluminium rectangular-section tube,
**in that** the overlap portion is a cheek-like, longitudinally running wall projection, in the form of a steel flange (10SW), of the longitudinal beam steel closing part (5SW), and
**in that** the steel flange (10SW) bears against and is connected by screw connections (13) to a vertical wall (11) of the aluminium rectangular-section tube.

3. Longitudinal beam according to Claim 2, **characterized in that** a predefined hole pattern (12) is provided on the steel flange (10SW) and the screw connections (13) are produced by means of self-tapping screws together with adhesive bonding.

4. Longitudinal beam according to Claim 2 or Claim 3, **characterized in that** the steel flange (10SW) is a frontal elongation of the vertical wall, situated towards the vehicle outer side, of the angular longitudinal beam steel closing part (5SW) which serves, in conjunction with a longitudinally running base plate stepped bend (18), to form a cabin longitudinal beam (3) of rectangular cross section.

5. Longitudinal beam according to one of Claims 1 to 4, **characterized in that** the front cabin floor and the transition to the bulkhead is formed as an aluminium structure cast part (9AG) on which at one side the vehicle front end longitudinal beam (2AP) is supported and connected and to which at the other side the aluminium base plate (4AB) is attached and by means of which the longitudinal beam steel closing part (5SW) with its overlap portion, in particular its steel flange (10SW), is guided and sealed off at the passage point.

6. Longitudinal beam according to Claim 5, **characterized in that** the aluminium structure cast part (9AG), proceeding from an end-side support region (22AG), engages with a set-down region (19AG, 20AG) around the associated vehicle front end longitudinal beam (2AP) at least on one side, in particular engages with opposite set-down regions (19AG, 20AG) around said associated vehicle front end longitudinal beam with an areal abutting connection and/or on opposite sides.

7. Longitudinal beam according to Claim 6, **characterized in that** the steel flange (10SW) bears with an areal abutting connection against the associated set-down region (19AG) and furthermore, in the region outside the steel flange (10SW), passes over via a steel flange step (21) or bend into an areal abutting connection to the vehicle front end longitudinal beam (2AP).

8. Longitudinal beam according to Claim 6 or 7, **characterized in that** a predefined hole pattern is provided on the set-down region (19AG) assigned to the steel flange (10SW), which hole pattern is aligned with the hole pattern (12) of the associated steel flange (10SW), and/or **in that** the at least one set-down region (19AG, 20AG) is connected by screw connections (13) to the vehicle front end longitudinal beam (2AP).

9. Longitudinal beam according to one of Claims 1 to 8, **characterized in that** the vehicle front end longitudinal beam (2AB) runs rectilinearly in the vehicle longitudinal direction and lies higher than the cabin floor, and an upwardly curved height equalizing region is provided in the front region of the cabin longitudinal beam (3).

10. Longitudinal beam according to one of Claims 1 to 9, **characterized in that** the connection of the longitudinal beam steel closing part (5SW) to the bulkhead (6), which is produced as an aluminium sheet metal component and/or as an aluminium cast part, and to the aluminium base plate (4AB) is produced by rivet connections, preferably by means of solid self-piercing rivets and adhesive bonding.

## Revendications

1. Longeron d'une structure de carrosserie de véhicule,
constitué d'un longeron de partie avant (2AP) et d'un longeron de cabine (3) dans la région de plancher de l'habitacle, lesquels longerons sont reliés l'un à l'autre dans la région d'une paroi frontale (6),
le longeron de partie avant (2AP) étant un profilé filé tubulaire en aluminium, **caractérisé en ce que** le longeron de cabine (3) est formé, en tant que longeron creux fermé, par une tôle de plancher en aluminium (4AB) et, au niveau de son côté supérieur, par une cornière de longeron se raccordant à la tôle de plancher en tant que partie de fermeture de longeron en acier (5SW) réalisée à partir d'acier formé à chaud, et
**en ce que** le longeron de partie avant (2AP) et le longeron de cabine (3) sont orientés de manière alignée dans un plan longitudinal vertical, le longeron de partie avant (2AP) se terminant du côté arrière au niveau de la paroi frontale (6) et le longeron de cabine (3) étant guidé du côté avant à travers la paroi frontale (6) à l'aide d'un tronçon de chevauchement (10SW), s'appliquant ainsi contre le longeron de partie avant (2AP) et y étant relié (13) à ce dernier.

2. Longeron selon la revendication 1, **caractérisé en ce que** le longeron de partie avant (2AP) est réalisé sous forme de tube rectangulaire en aluminium,
**en ce que** le tronçon de chevauchement est une extension de paroi en forme de joue qui s'étend longitudinalement en tant que bride en acier (10SW) de la partie de fermeture de longeron en acier (5SW), et
**en ce que** la bride en acier (10SW) s'applique contre une paroi verticale (11) du tube rectangulaire en aluminium et est reliée à cette dernière par des vissages (13).

3. Longeron selon la revendication 2, **caractérisé en ce qu'**un motif de trous (12) est prédéfini sur la bride en acier (10SW) et les vissages (13) sont produits au moyen de vis autotaraudeuses conjointement avec un collage.

4. Longeron selon la revendication 2 ou 3, **caractérisé en ce que** la bride en acier (10SW) est un prolongement du côté avant de la paroi verticale, tournée vers le côté extérieur du véhicule, de la partie de fermeture de longeron en acier (5SW) angulaire, avec laquelle, en association avec une partie recourbée étagée de tôle de plancher (18) s'étendant longitudinalement, un longeron de cabine (3) de section transversale rectangulaire est réalisé.

5. Longeron selon l'une quelconque des revendications 1 à 4, **caractérisé en ce que** le plancher de cabine avant et la transition avec la paroi frontale sont réalisés sous forme de partie structurale moulée en aluminium (9AG) sur laquelle, d'un côté, le longeron de partie avant (2AP) s'appuie et à laquelle il se raccorde, et à laquelle, de l'autre côté, la tôle de plancher en aluminium (4AB) est rattachée, et au moyen de laquelle la partie de fermeture de longeron en acier (5SW) est guidée à l'aide de son tronçon de chevauchement, en particulier de sa bride en acier (10SW), et est rendue étanche au niveau du point de passage.

6. Longeron selon la revendication 5, **caractérisé en ce que** la partie structurale moulée en aluminium (9AG) vient en prise autour du longeron de partie avant (2AP) associé à partir d'une région d'appui (22AG) frontale au moins d'un côté par l'intermédiaire d'une région de placement (19AG, 20AG), en particulier vient en prise autour de celui-ci dans une liaison par appui plane et/ou sur des côtés opposés par l'intermédiaire de régions de placement opposées (19AG, 20AG).

7. Longeron selon la revendication 6, **caractérisé en ce que** la bride en acier (10SW) s'applique dans une liaison par appui plane contre la région de placement (19AG) associée, et en outre se prolonge dans une liaison par appui plane par le longeron de partie avant (2AP) dans la région en dehors de la bride en acier (10SW) par l'intermédiaire d'un étagement (21) ou d'une courbure de bride en acier.

8. Longeron selon la revendication 6 ou 7, **caractérisé en ce qu'**un motif de trous est prédéfini sur la région de placement (19AG) associée à la bride en acier (105SW), lequel motif de trous est aligné avec le motif de trous (12) de la bride en acier (10SW) associée, et/ou **en ce que** l'au moins une région de placement (19AG, 20AG) est reliée au longeron de partie avant (2AP) au moyen de vissages (13).

9. Longeron selon l'une quelconque des revendications 1 à 8, **caractérisé en ce que** le longeron de partie avant (2AB) s'étend en ligne droite dans la direction longitudinale du véhicule et se situe plus haut que le plancher de cabine, et une région de compensation de la hauteur bombée vers le haut est prévue dans la région avant du longeron de cabine (3).

10. Longeron selon l'une quelconque des revendications 1 à 9, **caractérisé en ce que** le raccordement de la partie de fermeture de longeron en acier (5SW) à la paroi frontale (6) réalisée sous forme de partie de tôle en aluminium et/ou sous forme de partie moulée en aluminium, ainsi qu'à la tôle de plancher en aluminium (4AB) est réalisé par des liaisons par rivetage, de préférence par rivetage par rivets auto-poinçonneurs pleins et par collages.
